# EUROPEAN PATENT SPECIFICATION

(11) **EP 3 663 440 B1**
(45) Date of publication and mention of the grant of the patent: **19.08.2026**
(21) Application number: 19211983.2
(22) Date of filing: 28.11.2019
(51) Int. Cl.: D01D 1/10, D01D 5/098, D01D 4/02, D01D 4/08, D01D 4/06

(54) **A DEVICE FOR MAKING POLYMER FIBRE FOR A SYSTEM OF THE SPUNBOND AND/OR MELT-BLOWN TYPE**
VORRICHTUNG ZUR HERSTELLUNG EINER POLYMERFASER FÜR EIN SYSTEM FÜR SPINNVLIES UND/ODER SCHMELZGEBLASENES VLIES
DISPOSITIF DE FABRICATION DE FIBRE DE POLYMÈRE POUR UN SYSTÈME DU TYPE FILÉ-LIÉ ET/OU FUSION-SOUFFLAGE

(30) Priority: 05.12.2018 IT 201800010823; 25.06.2019 IT 201900010044
(43) Date of publication of application: 10.06.2020
(73) Proprietor: CAT S.r.l., 64100 Teramo (IT)
(72) Inventor: ANGELICO, Giuseppe, I-20095 CUSANO MILANINO (Milano) (IT); MINUNNI, Rosa Maria, I-20095 CUSANO MILANINO (Milano) (IT)
(74) Representative: Lunati & Mazzoni S.r.L.

(56) References cited:
- EP-A1- 0 220 324
- EP-A1- 0 455 492
- WO-A2-2006/020109
- US-A- 3 788 486
- US-A- 4 661 249
- RIGBY W R ET AL: "POROUS SINTERED METAL AND CERAMIC FILTERS FOR THE PRODUCTION OF MAN-MADE POLYMER FIBERS", CHEMICAL FIBERS INTERNATIONAL,, vol. 51, no. 1, 1 February 2001 (2001-02-01), pages 57/58, XP001004968, ISSN: 0340-3343

## Description

This invention concerns a device for making polymer fibre for a system of the spunbond and/or melt-blown type of the kind specified in the preamble of the first claim.

In other words, this invention concerns a device adapted to enable the manufacturing of polymer fibres extruded by means of at least part of said device and designed to make NW-type fabric, directly or indirectly.

Similar devices are described within documents EP-A-0455492, EP-A-0220324, US-A-4661249, RIGBY W R ET AL: "POROUS SINTERED METAL AND CERAMIC FILTERS FOR THE PRODUCTION OF MAN-MADE POLYMER FIBERS", CHEMICAL FIBERS INTERNATIONAL, vol. 51, no. I, 1 February 2001 (2001-02-01), page 57/58, XP001004968, ISSN: 0340-3343, US-A-3788486.

As is known, non-woven fabric, or NW, is an industrial product similar to a fabric, but which is obtained with methods other than weaving and knitting. Thus, in a non-woven fabric, the fibres have a random development, without identifying any orderly structure, while in a fabric, the fibres have two directions, which are prevalent and orthogonal to one another, usually known as the warp and weft.

At present, a plurality of products containing NW are made depending on the manufacturing technique used, which is mainly related to the way in which the product itself is used.

In particular, high-quality NWs for hygiene- and sanitary-type products are distinguished from low-quality NWs used above all for geotex.

From a technical point of view, non-woven fabrics can essentially be divided into spunlace, spunbond, and melt-blown.

Spunlace fabric undergoes processing, which gives the material omnidirectional strength. Due to this property and to the possibility of its being produced in various materials, such as viscose, polyester, cotton, polyamide and microfibre, and to the possible finishes, i.e. smooth or perforated, and to the multitude of smooth or printed colours, spunlace is recommended for the hygiene and sanitary sector, for the automotive and cosmetic sectors, and for industrial or disposable uses.

Spunbond, which is usually made with polypropylene, is a non-woven fabric, which can be used in a variety of ways in the agricultural, hygiene and sanitary, construction, furniture, mattress, and other related sectors. By means of an appropriate treatment, it is possible to make a series of highly specific products for each sector: fluorescent, soft calendered, anti-mite, fireproof, anti-bacterial, antistatic, anti-UV and others. Furthermore, numerous finishes can be applied to Spunbond, such as printed, laminated, printed laminated in flexography and self-adhesive.

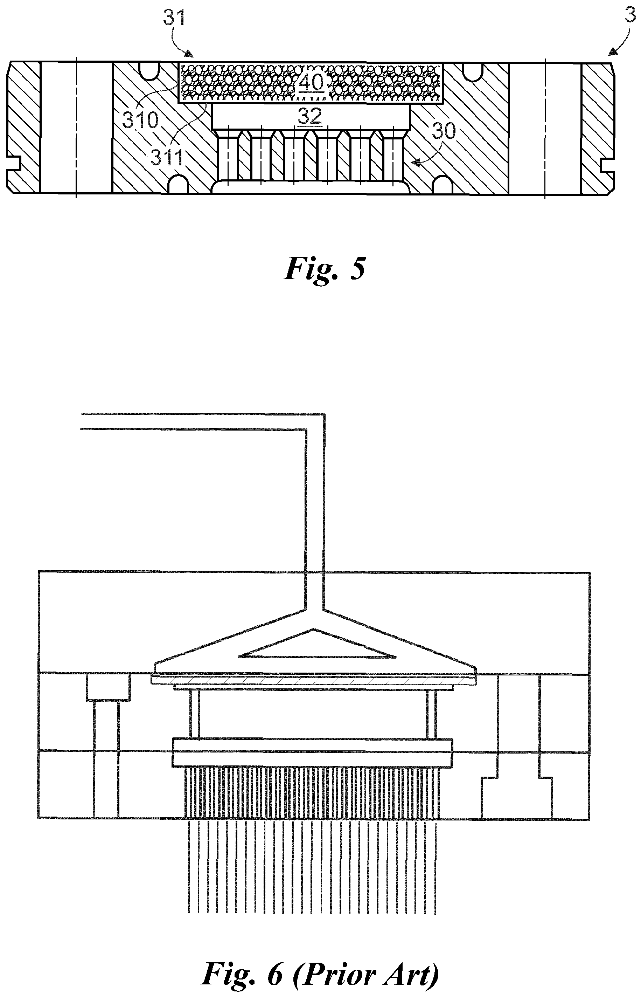

Systems for producing non-woven spunbond fabric are traditionally made up of components, as shown in Fig. 5.

In particular, the system essentially includes at least one inlet pipe for the polymer substance, an extrusion head for the polymer, a distributor or breaker plate for the polymer and a spinneret adapted to make the actual spunbond thread, which is deposited on a conveyor belt.

The above-mentioned elements are each arranged correspondingly and adjacently to one another so as to enable the processing of the polymer and the distribution of the spunbond NW.

More specifically, the polymer inside the inlet pipe is pushed under pressure and at a high temperature, usually above 200°C, towards the extrusion head. In this respect, a pressurised control is generally carried out, for example, by means of a pressure switch, to guarantee the continuity of the thread coming out and the accuracy of the depositing process.

The extrusion head distributes the polymer along a distribution surface through which the molten polymer reaches the distributor. A filter is present between the distributor, or breaker plate, and the extrusion head, which is composed of a sheet of steel, usually with a thickness varying between 0.8 and 1.6 mm, and including fine mesh, for example, with nominal dimensions ranging from 20 to 110 µm. Thus, the above-mentioned filter is essentially a stretched net.

After its passage inside the filter, the molten polymer enters the distributor, which accompanies the polymer towards the spinneret where the polymer is extruded in fibres constituting the spunbond NW.

More specifically, the filter has the purpose of blocking particles or pigments of polymer, which are not perfectly melted, or which are nonetheless larger and could block the NW extrusion holes, which are extremely small, on entering the spinneret. Melt-blown NW is made by means of specific spinnerets so as to obtain more sophisticated technical features than the previous NWs. In fact, melt-blown fabric is characterised by fibres with higher filtering power, both for liquid and aeriform substances.

Systems for producing melt-blown non-woven fabric are composed of a box that contains the device for making melt-blown fibre and all the parts needed for the process to work optimally. Furthermore, known systems also comprise an extrusion head and a distributor, and an air knife.

The extrusion head and the distributor basically have the same features as the extrusion head and distributor used in spunbond technology and include a filter adapted to sieve the incoming polymer fluid. However, melt-blown devices usually already comprise a spinneret inside the distributor adapted to channel the polymer fibres towards the support.

The support serves to direct the polymer fibre towards the air knife and it is arranged so as to direct the fibres from the breaker plate towards a hole comprised in a cusp. Whereas, the air knife is composed of a casing wrapping the cusp of the melt-blown device so as to direct a flow of air, possibly non-turbulent, towards the hole of the cusp.

The prior art described here comprises a few important drawbacks.

In particular, although the filter is usually effective, it can become blocked easily and quickly.

In particular, such functional deviation is extremely important for polymers with a dark pigmentation, the particles of which are initially larger than the lighter colours. Furthermore, regular systems, which adopt the described filter, risk exploding due to increases in pressure inside the extrusion head deriving from the accumulation of polymer.

Besides obviously being relevant in terms of safety, this drawback is also relevant in terms of efficiency and costs of the system, which, when subject to overpressure, necessarily needs to be stopped for cleaning or to replace the filter.

In this situation, the technical task underlying this invention is to develop a device for making polymer fibre for a system of the spunbond and/or melt-blown type, capable of essentially overcoming at least part of the drawbacks mentioned.

In the context of said technical task, it is an important purpose of the invention to obtain a device that enables the polymer accumulations to be significantly reduced in the extrusion head, without losing the efficiency required for the regular execution of the NW manufacturing process.

It is another important purpose of the invention to produce a device for making polymer fibre for a system of the spunbond and/or melt-blown type that is safe, enabling the prevention, or at least the significant reduction, of instances of excess pressure, which can result in the device's breaking.

Consequently, it is a further task of the invention to produce a device for making polymer fibre for a system of the spunbond and/or melt-blown type, which enables a reduction in losses of time and profits caused by the device's blocking.

The technical task and the specified purposes are achieved by a device for making polymer fibre for a system of the spunbond and/or melt-blown type, as claimed in the attached claim 1.

Preferred technical solutions are highlighted in the dependent claims.

The features and advantages of the invention are clarified below by the detailed description of preferred embodiments of the invention, with reference to the accompanying drawings, wherein:
**Fig. 1** shows a cross-section view of a device for making polymer fibre for a system of the spunbond type according to the invention;
**Fig. 2** illustrates a cross-section view of a device for making polymer fibre for a system of the melt-blown type according to the invention;
**Fig. 3** is a perspective view of a device for making polymer fibre for a system of the melt-blown type according to the invention with a seat;
**Fig. 4** represents a perspective view of a device for making polymer fibre for a system of the melt-blown type according to the invention with a plurality of seats;
**Fig. 5** shows the detail of a distributor of a device for making polymer fibre for a system of the spunbond and/or melt-blown type according to the invention comparable to a breaker plate, wherein the separation space between the porous element and the distribution pipes is highlighted; and
**Fig. 6** illustrates a cross-section view of a device for making NW of the spunbond type of the prior art;
**Fig. 7** is a perspective view of a device for making polymer fibre for a system of the melt-blown type according to the invention with a plurality of seats, wherein the support means are arranged in the central zone, along the longitudinal extension of the seats; and
**Fig. 8** represents the detail of a distributor of a device for making polymer fibre for a system of the spunbond and/or melt-blown type according to the invention comparable to a breaker plate, wherein the separation space between the porous element and the distribution pipes is highlighted and wherein the support means are arranged in the central zone, along the longitudinal extension of the seat.

In this document, the measures, values, shapes, and geometric references (such as perpendicularity and parallelism), when associated with words like "about" or other similar terms such as "approximately" or "essentially", are to be understood as except for measurement errors or inaccuracies owing to production and/or manufacturing errors and, above all, except for a slight divergence from the value, measure, shape, or geometric reference with which it is associated. For example, these terms, if associated with a value, preferably indicate a divergence of not more than 10% of the value.

Furthermore, when used, terms such as "first", "second", "higher", "lower", "main" and "secondary" do not necessarily identify an order, a priority relationship, or a relative position, but can simply be used to more clearly distinguish between the different components.

Unless otherwise stated, the measurements and data reported in this text shall be considered as performed in International Standard Atmosphere ICAO (ISO 2533:1975).

With reference to the Figures, the number 1 indicates as a whole the device for making polymer fibre for a system of the spunbond and/or melt-blown type according to the invention.

Thus, the device 1 is preferably included in a system for making NW of the spunbond or melt-blown type.

The system is preferably configured to make non-woven fabric based on spunbond or melt-blown technology or both in a combined manner. The latter essentially make sure that the molten polymer material is extruded by means of a plurality of holes with micrometric nominal dimensions adapted to distribute the polymer fibres guided towards a conveyor belt or to introduce the polymer fibres in a hole in a cusp, in contact with one or more air knives.

The stated technique is known in the current state of the art.

In fact, the device 1 is preferably designed to perform the same functions as devices comprised in common spunbond and melt-blown systems and it is configured to receive and distribute the polymer material in the form of polymer fibre, as in the prior art.

In fact, the device 1 comprises a number of elements of the prior art.

The device 1 preferably includes at least one distributor 3. Furthermore, but not necessarily, the device 1 also includes an extrusion head 2.

The extrusion head 2 is preferably essentially a common extrusion head, for example, known as a coat-hanger. However, the extrusion head 2 may already be part of the spunbond and/or melt-blown system and in this case, it may not be comprised in the device 1. Nevertheless, the distributor 3 is preferably adapted to interact with the extrusion head 2.

The extrusion head 2 is preferably adapted to guide a polymer fluid to the distributor 3. Thus, the extrusion head 2 preferably includes at least one main channel 20.

The main channel 20 is a narrow opening or passage pipe with any shape or size and can thus be cylindrical or square compatibly with the other elements with which the main pipe 20 interfaces.

The main channel 20 is preferably adapted to enable the passage of polymer fluid through the extrusion head 2. In particular, the main channel 20 is adapted to cause the polymer fluid to flow towards the distributor 3.

The distributor 3 is adapted to distribute polymer fluid. Essentially, the distributor 3 preferably corresponds to a breaker-plate of the spunbond and/or melt-blown system.

Thus, the distributor 3 preferably includes at least one distribution pipe 30.

The distribution pipe 30 is preferably in fluidic connection with the main channel 20. Thus, it is adapted to distribute the polymer fluid. In detail, the distributor 30 distributes the polymer fluid to other components to make NW, for example.

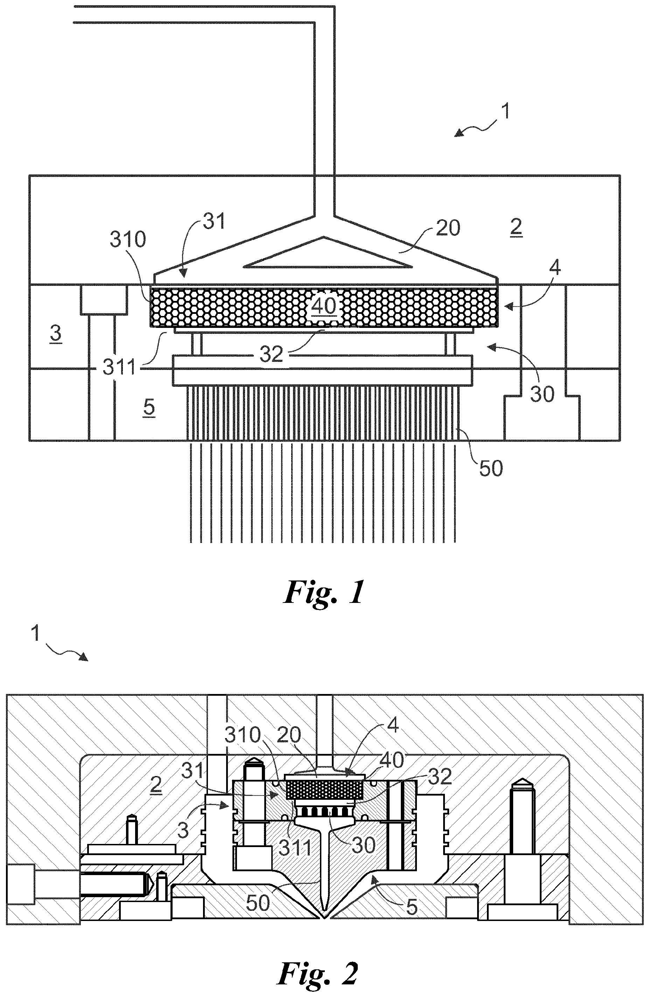

As shown in Fig. 1, and as present in some devices of the prior art, both the main channel 20 and the distribution pipe 30 can define complex shapes. Furthermore, they can split in two and involve sub-channels to distribute the polymer fluid. In other words, the distributor can include a plurality of distribution pipes 30 arranged downstream of the main channel 20, each adapted to distribute smaller quantities of polymer fluid than the main channel 20. Above all, in melt-blown type systems, the distributor 3 preferably includes a plurality of distribution pipes 3.

In any case, advantageously and unlike the prior art, the device 1 includes filtering means **4.**

The filtering means 4 are preferably arranged, in general, upstream of the distribution pipe 30. In particular, the filtering means 4 are arranged between the main channel 20 and the distribution pipe 30 so as to filter the polymer fluid.

The filtering means 4, in particular, preferably include a porous element **40.**

The porous element 40 is essentially structurally similar to a sponge. In this sense, the porous element is not to be understood to be a soft and easily deformable element. On the contrary, the porous element is preferably defined, in terms of rigidity and hardness, by the materials and manufacturing methods, which distinguish it.

However, the porous element 40, like the sponges, also includes a plurality of pores, which make the porous element 40 itself essentially uneven and anisotropic.

In particular, the porous element 40 is preferably an element made with the sintering technique.

Due to the manufacturing process, the latter preferably comprises a plurality of non-rectilinear through channels having varying dimensions.

The term dimensions refers to all of the dimensions, which contribute to the volumetric determination of the cavities or pores characterising the porous element 40.

More specifically, the filtering means 4 preferably comprise a plurality of pores, or cavities, defining the through channels when adjacent. In other words, the consistency of the pores creates the through channels for the polymer fluid.

Furthermore, each of the pores has a porosity suitable for filtering particles contained in the polymer melt.

As said previously, the porous element 40 is preferably processed by sintering and thus, comprises a plurality of particles of the same mutually sintered material.

The particles can thus be of any material, provided it is resistant to the passage of the polymer fluid. For example, the porous element 40 comprises a metal material. Furthermore, the sintered particles can be of a different kind.

For example, in a first embodiment, the particles can be components chosen between balls or fragments.

In a second embodiment, the porous element 40 can comprise fibres, which are mutually interwoven and sintered.

In a third embodiment, the porous element 40 can include a first layer and a second layer. Such layers are preferably mutually overlapping and include the components and the fibres respectively as described previously. In detail, the first layer and the second layer are preferably adjacent to the extrusion head 2 and to the distributor respectively, or they are adjacent to the distributor 3 and to the extrusion head 2 respectively.

Furthermore, sintering may occur in one layer only, both of particles and of fibres.

The porous element 40 can thus be arranged between the extrusion head 2 and the distributor 3, and it is preferably housed in a seat of the distributor.

The porous element 40 is preferably housed inside the distributor 3.

The porous element 40 can thus be made in a single piece with the distributor 3 or, preferably, it is removably available in the distributor 3.

Therefore, the distributor 3 preferably includes at least one seat 31.

The seat 31 is substantially a tub inside which the porous element 40 can be placed. Thus, this seat 31 is preferably, arranged upstream of the distribution pipe 30. Therefore, when the distributor 3 is in contact with the extrusion head 2, the seat 31 is adjacent to the extrusion head 2 and arranged between the main channel 20 and the distribution pipe 30.

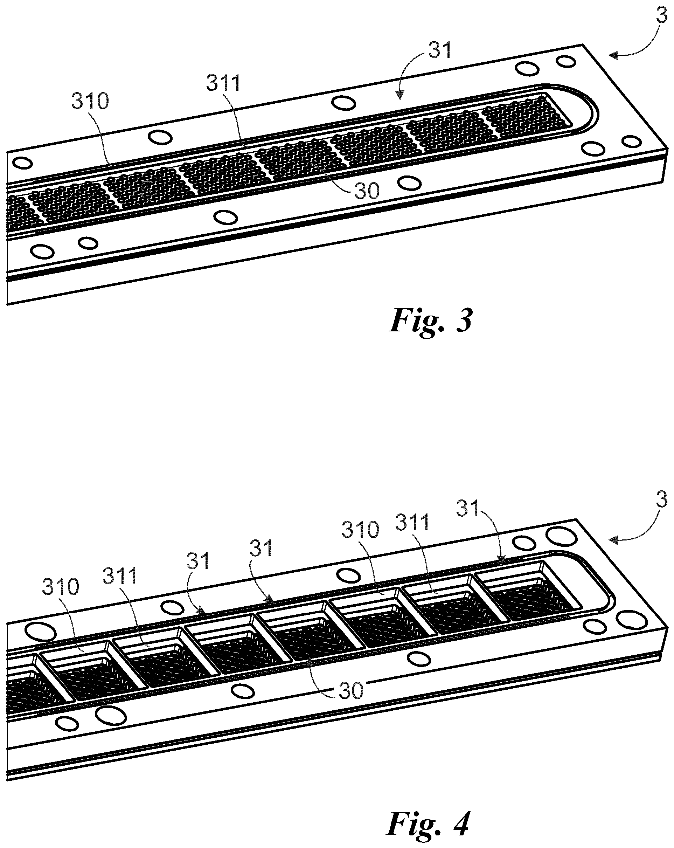

Thus, the device 1 can include a single seat 31, as shown in Fig. 2, or it can have a plurality of adjacent seats 31, as shown in Fig. 3.

Nonetheless, the porous element 40 preferably has a complementary shape to part of the seat 31 and it is arranged removably inside the seat 31.

Thus, if there are multiple seats 31, the device 1 can comprise a plurality of porous elements 40, which can be introduced as pads inside the opportune seats.

Advantageously, according to the invention, each seat 31 is adapted to house the porous element 40 so that the latter is spaced apart from the distribution pipe 30. In particular, and especially when the distributor 3 includes a plurality of distribution pipes 30, the seat 31 is preferably configured to prevent adhesion between the filtering means 4 and the distribution pipes 30.

In this respect, the seat 31 preferably includes at least one housing **310** and support means **311.**

The housing 310 is preferably the portion of seat 31 adapted to completely house the porous element 40. Therefore, the latter has, in particular, a shape that is complementary to the housing 310.

The support means 311 are preferably adapted to enable the support of the porous element 40 thereon, so that the latter stays in the housing 310 spaced apart from the distribution pipe or pipes 30.

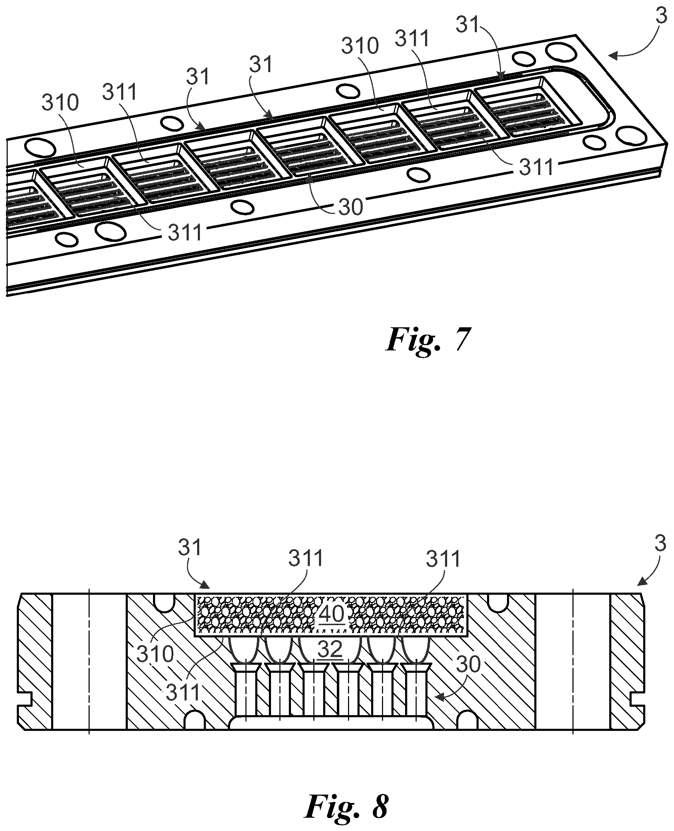

Therefore, the support means 311 can include a support frame, arranged at the edges of the seat 31, as shown in Fig. 4, or other spacer elements. The support means 311 can also include a plurality of elements arranged in the central zone of the seat 31 or along the extension of the seat 31. An example of this type is shown in Figs. 7-8.

In this case, the support means 311 are configured, above all, to prevent the filtering means 4 from being subjected to deformations, during normal operation of the device 1, such as to compromise the functionality thereof.

Essentially, the support means 311 can define localised support points or support lines, for example, transversal or longitudinal to the extension of the entire distributor 3, or breaker-plate, or they can also be defined by a grid of support lines, which are both longitudinal and transversal.

The support means 311 are generally configured to create at least one separation space **32.**

The separation space 32 is preferably a portion of free space comprised between the porous element 40 and the distribution channel 30 defining a thickness thereof. The thickness of the separation space 32 is preferably at least equal to 500 µm.

Even more preferably, the separation space 32 ranges from 500 µm to 8 cm.

Preferably, but not necessarily, the separation space 32 defines a thickness that is greater than or equal to the thickness of the porous element 40. In the preferred embodiment, the latter defines a thickness at least equal to 1.5 mm. Even more specifically, the porous element 40 preferably defines thicknesses ranging from 1.5 mm to 10 mm.

Furthermore, in the preferred embodiment, the pores of the porous element 4 preferably define a porosity suitable for enabling filtration of polymer particles.

The polymer fluid is preferably chosen from the following: polypropylene, polyester, nylon, cellulose, polyester or viscose.

In conclusion, the device 1 can include a spinneret **5.** Or, the spinneret 5 can be included in the system of the spunbond and/or melt-blown type and configured to interact with the distributor 3.

In fact, the spinneret 5 can be a separate element from the distributor 3, as in common spunbond systems, or it can be part of the distributor 3, as in common melt-blown systems.

In any case, the spinneret 5 preferably comprises a plurality of holes 50. Such holes 50 are preferably in fluidic connection with the distribution pipe 30 and adapted to extrude polymer fibres.

Opportunely, the holes 50 have diameters that can vary in size depending on the use for which they are intended.

For example, the holes 50 for a device 1 of a spunbond system are preferably smaller in size than the holes 50 for a device 1 of a melt-blown system.

The operation of the device for making polymer fibre for a system of the spunbond and/or melt-blown 1 type, described previously in structural terms, is similar to that of regular systems.

However, during the polymer fluid's passage, the device 1 filters it continuously, crushing almost all of the pigmented particles trapped inside the filtering means 4. In fact, the highly irregular conformation of the porous element 40 doesn't allow the polymer particles to be deposited and stratify, which does happen, on the other hand, with net filters of the prior art.

The device for making polymer fibre for a system of the spunbond and/or melt-blown 1 type according to the invention results in important advantages.

In fact, the device 1 prevents the filtering means from blocking by crushing, as described, most of the polymer particles crossing the porous element 40.

Thus, an additional advantage comes from the fact that the costs of maintaining the system are significantly reduced, both in terms of money and time, increasing the efficiency and safety of the systems on which the devices 1 are installed.

The invention is subject to variations falling within the scope of the inventive concept defined by the claims.

## Claims

1. A device (1) for making polymer fibre for a system of the spunbond and/or melt-blown type comprising:
- a distributor (3) including at least one distribution pipe (30) adapted to distribute said polymer fluid and at least one seat (31) arranged upstream of said distribution pipe (30),
- filtering means (4) arranged upstream of said distribution pipe (30) so as to filter said polymer fluid, at least partially housed in said seat (31), and including a porous element (40) defining a plurality of non-rectilinear passage channels of varying sizes,
- said seat (31) including:
- at least one housing (310) adapted to house said porous element (40), and
- support means (311) adapted to enable the support of said porous element (40) thereon, so that the porous element (40) stays in said housing (310) spaced apart from said distribution pipe (30) creating a separation space (32),
and said device **being characterised in that**
- said support means (311) comprise a plurality of elements arranged in the central zone or along the extension of said seat (31) so as to prevent said filtering means (4) from being subjected to deformations, during normal operation of said device (1), which are such as to compromise the functionality thereof.

2. A device (1) according to claim 1, wherein said distributor (3) is a breaker-plate of said system of the spunbond and/or melt-blown type.

3. A device (1) according to any one of the preceding claims, comprising an extrusion head (2) including at least one main channel (20) adapted to enable the passage of polymer fluid through said extrusion head (2), said distribution pipe (30) being in fluidic connection with said main channel (20) and said filtering means (4) being arranged between said main channel (20) and said distribution pipe (30) so as to filter said polymer fluid.

4. A device (1) according to the preceding claim, wherein said seat (31) is adjacent to said extrusion head (2) and arranged between said main channel (20) and said distribution pipe (30).

5. A device (1) according to any one of the preceding claims, wherein said porous element (40) comprises a plurality of sintered particles.

6. A device (1) according to any one of the preceding claims, wherein said porous element (40) comprises a metal material.

7. A device (1) according to claim 5, wherein said sintered particles are components chosen between balls or fragments.

8. A device (1) according to any one of the preceding claims, wherein said porous element (40) comprises mutually interwoven and sintered fibres.

9. A device (1) according to claims 7 and 8, wherein said porous element (40) comprises a plurality of mutually overlapping layers, respectively including said components and said fibres or only one layer comprising both said components and said mutually sintered fibres.

10. A device (1) according to any one of the preceding claims, wherein said separation space (32) defines a minimum thickness of 500 µm.

11. A device (1) according to any one of the preceding claims, comprises at least one spinneret (5) including a plurality of holes (50) each in fluidic connection with said distribution pipe (30) and adapted to extrude polymer fibres.

12. A system of the spunbond and/or melt-blown type, comprising a device (1) according to any one of the preceding claims.

## Patentansprüche

1. Vorrichtung (1) zur Herstellung von Polymerfasern für ein System vom Spunbond- und/oder Melt-Blown-Typ, umfassend:
- einen Verteiler (3), der mindestens eine Verteilerleitung (30) umfasst, die dazu ausgebildet ist, das genannte Polymerfluid zu verteilen, sowie mindestens einen Sitz (31), der stromaufwärts der genannten Verteilerleitung (30) angeordnet ist,
- Filtermittel (4), die stromaufwärts der genannten Verteilerleitung (30) angeordnet sind, um das genannte Polymerfluid zu filtern, wobei sie zumindest teilweise in dem genannten Sitz (31) aufgenommen sind, und ein poröses Element (40) umfassen, das eine Vielzahl nicht geradliniger Durchgangskanäle unterschiedlicher Größe definiert,
- wobei der genannte Sitz (31) umfasst:
- mindestens eine Aufnahme (310), die zur Aufnahme des genannten porösen Elements (40) ausgebildet ist, und
- Stützmittel (311), die dazu ausgebildet sind, das genannte poröse Element (40) darauf abzustützen, sodass das poröse Element (40) in der genannten Aufnahme (310) mit Abstand zu der genannten Verteilerleitung (30) verbleibt, wodurch ein Trennraum (32) gebildet wird,
wobei die genannte Vorrichtung **dadurch gekennzeichnet ist, dass**
- die genannten Stützmittel (311) eine Vielzahl von Elementen umfassen, die im zentralen Bereich oder entlang der Erstreckung des genannten Sitzes (31) angeordnet sind, um zu verhindern, dass die genannten Filtermittel (4) während des normalen Betriebs der genannten Vorrichtung (1) Verformungen ausgesetzt werden, welche geeignet sind, deren Funktionsfähigkeit zu beeinträchtigen.

2. Vorrichtung (1) nach Anspruch 1, wobei der genannte Verteiler (3) eine Lochplatte des genannten Systems vom Spunbond- und/oder Melt-Blown-Typ ist.

3. Vorrichtung (1) nach einem der vorhergehenden Ansprüche, umfassend einen Extrusionskopf (2), der mindestens einen Hauptkanal (20) umfasst, der dazu ausgebildet ist, den Durchtritt des Polymerfluids durch den genannten Extrusionskopf (2) zu ermöglichen, wobei die genannte Verteilerleitung (30) strömungstechnisch mit dem genannten Hauptkanal (20) verbunden ist und die genannten Filtermittel (4) zwischen dem genannten Hauptkanal (20) und der genannten Verteilerleitung (30) angeordnet sind, um das genannte Polymerfluid zu filtern.

4. Vorrichtung (1) nach dem vorhergehenden Anspruch, wobei der genannte Sitz (31) an den genannten Extrusionskopf (2) angrenzt und zwischen dem genannten Hauptkanal (20) und der genannten Verteilerleitung (30) angeordnet ist.

5. Vorrichtung (1) nach einem der vorhergehenden Ansprüche, wobei das genannte poröse Element (40) eine Vielzahl gesinterter Partikel umfasst.

6. Vorrichtung (1) nach einem der vorhergehenden Ansprüche, wobei das genannte poröse Element (40) ein metallisches Material umfasst.

7. Vorrichtung (1) nach Anspruch 5, wobei die genannten gesinterten Partikel Komponenten sind, die aus Kugeln oder Fragmenten ausgewählt sind.

8. Vorrichtung (1) nach einem der vorhergehenden Ansprüche, wobei das genannte poröse Element (40) miteinander verflochtene und gesinterte Fasern umfasst.

9. Vorrichtung (1) nach den Ansprüchen 7 und 8, wobei das genannte poröse Element (40) eine Vielzahl sich gegenseitig überlappender Schichten umfasst, die jeweils die genannten Komponenten bzw. die genannten Fasern umfassen, oder nur eine einzige Schicht, die sowohl die genannten Komponenten als auch die genannten miteinander gesinterten Fasern umfasst.

10. Vorrichtung (1) nach einem der vorhergehenden Ansprüche, wobei der genannte Trennraum (32) eine Mindestdicke von 500 µm definiert.

11. Vorrichtung (1) nach einem der vorhergehenden Ansprüche, umfassend mindestens eine Spinndüse (5), die eine Vielzahl von Löchern (50) umfasst, wobei jedes Loch strömungstechnisch mit der genannten Verteilerleitung (30) verbunden und zum Extrudieren von Polymerfasern ausgebildet ist.

12. System vom Spunbond- und/oder Melt-Blown-Typ, umfassend eine Vorrichtung (1) nach einem der vorhergehenden Ansprüche.

## Revendications

1. Dispositif (1) pour la fabrication de fibres polymères pour un système de type spunbond et/ou melt-blown comprenant :
- un distributeur (3) comprenant au moins un conduit de distribution (30) adapté pour distribuer ledit fluide polymère et au moins un siège (31) disposé en amont dudit conduit de distribution (30),
- des moyens de filtration (4) disposés en amont dudit conduit de distribution (30) de manière à filtrer ledit fluide polymère, au moins partiellement logés dans ledit siège (31), et comprenant un élément poreux (40) définissant une pluralité de canaux de passage non rectilignes de tailles variables,
- ledit siège (31) comprenant :
- au moins un logement (310) adapté pour loger ledit élément poreux (40), et
- des moyens de support (311) adaptés pour permettre le support dudit élément poreux (40) sur ceux-ci, de sorte que l'élément poreux (40) demeure dans ledit logement (310) espacé dudit conduit de distribution (30), en créant un espace de séparation (32),
ledit dispositif **étant caractérisé en ce que**
- lesdits moyens de support (311) comprennent une pluralité d'éléments disposés dans la zone centrale ou le long de l'extension dudit siège (31) de manière à empêcher que lesdits moyens de filtration (4) ne soient soumis à des déformations pendant le fonctionnement normal dudit dispositif (1), lesquelles sont de nature à compromettre la fonctionnalité de celui-ci.

2. Dispositif (1) selon la revendication 1, dans lequel ledit distributeur (3) est une plaque de distribution dudit système de type spunbond et/ou melt-blown.

3. Dispositif (1) selon l'une quelconque des revendications précédentes, comprenant une tête d'extrusion (2) comprenant au moins un canal principal (20) adapté pour permettre le passage du fluide polymère à travers ladite tête d'extrusion (2), ledit conduit de distribution (30) étant en communication fluidique avec ledit canal principal (20) et lesdits moyens de filtration (4) étant disposés entre ledit canal principal (20) et ledit conduit de distribution (30) de manière à filtrer ledit fluide polymère.

4. Dispositif (1) selon la revendication précédente, dans lequel ledit siège (31) est adjacent à ladite tête d'extrusion (2) et disposé entre ledit canal principal (20) et ledit conduit de distribution (30).

5. Dispositif (1) selon l'une quelconque des revendications précédentes, dans lequel ledit élément poreux (40) comprend une pluralité de particules frittées.

6. Dispositif (1) selon l'une quelconque des revendications précédentes, dans lequel ledit élément poreux (40) comprend un matériau métallique.

7. Dispositif (1) selon la revendication 5, dans lequel lesdites particules frittées sont des composants choisis parmi des billes ou des fragments.

8. Dispositif (1) selon l'une quelconque des revendications précédentes, dans lequel ledit élément poreux (40) comprend des fibres mutuellement entrelacées et frittées.

9. Dispositif (1) selon les revendications 7 et 8, dans lequel ledit élément poreux (40) comprend une pluralité de couches se chevauchant mutuellement, comprenant respectivement lesdits composants et lesdites fibres, ou une seule couche comprenant à la fois lesdits composants et lesdites fibres mutuellement frittées.

10. Dispositif (1) selon l'une quelconque des revendications précédentes, dans lequel ledit espace de séparation (32) définit une épaisseur minimale de 500 µm.

11. Dispositif (1) selon l'une quelconque des revendications précédentes, comprenant au moins une filière de filage (5) comprenant une pluralité d'orifices (50), chacun étant en communication fluidique avec ledit conduit de distribution (30) et adapté pour extruder des fibres polymères.

12. Système de type spunbond et/ou melt-blown, comprenant un dispositif (1) selon l'une quelconque des revendications précédentes.
